Europäisches Patentamt

European Patent Office

Office européen des brevets

(19)

(11) Numéro de publication: **0 108 005**
**B1**

(12) # FASCICULE DE BREVET EUROPÉEN

(45) Date de publication du fascicule du brevet:
02.07.86

(51) Int. Cl.⁴: **B 01 D 53/04**

(21) Numéro de dépôt: **83402028.1**

(22) Date de dépôt: **19.10.83**

(54) **Procédé de traitement de gaz par adsorption comportant plusieurs adsorbeurs en phase de production simultanée.**

(30) Priorité: **22.10.82 FR 8217676**

(43) Date de publication de la demande:
**09.05.84 Bulletin 84/19**

(45) Mention de la délivrance du brevet:
**02.07.86 Bulletin 86/27**

(84) Etats contractants désignés:
**AT BE CH DE FR GB IT LI LU NL SE**

(56) Documents cité:
**EP-A-0 022 603**
**FR-A-2 193 643**
**FR-A-2 294 741**
**US-A-3 986 849**

(73) Titulaire: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Hay, Léon, 19, rue de la Vistule, F-75013 Paris (FR)**
Inventeur: **Simonet, Guy, 105, Cours de Vincennes, F-75020 Paris (FR)**

(74) Mandataire: **Leclercq, Maurice, L'AIR LIQUIDE SOCIETE ANONYME POUR L'ETUDE ET L'EXPLOITATION DES PROCEDES GEORGES CLAUDE 75, Quai d'Orsay, F-75321 Paris Cedex 07 (FR)**

EP 0 108 005 B1

## Description

L'invention concerne un procédé d'adsorption mettant en oeuvre une pluralité d'adsorbeurs avec les phases opératoires suivantes:

a) production isobare à pression dite haute à co-courant simultanément sur plusieurs adsorbeurs;

b) au moins une décompression à co-courant par équilibrage avec un autre adsorbeur en cours de recompression à contre-courant;

c) une décompression à pression intermédiaire à co-courant;

d) une décompression finale à pression dite basse à contrecourant;

e) une élution à ladite pression basse à contre-courant;

f) une recompression à contre-courant par au moins un équilibrage avec un autre adsorbeur en cours de décompression,

g) une recompression finale à contre-courant par dérivation d'une partie du courant de production.

Un tel procédé est connu de US-A- 3.986.849, qui décrit un système d'adsorption de grande capacité comportant au moins sept adsorbeurs qui permet d'obtenir une plus grande capacité de production que la simple duplication de deux systèmes à quatre lits précédemment connue, tout en maintenant seulement sept adsorbeurs avec un plus faible investissement en adsorbant, produit qui est particulièrement onéreux.

La présente invention vise encore à améliorer un tel système pour aboutir à un procédé qui permet de réduire encore d'une unité le nombre d'adsorbeurs, dans un procédé à adsorbeurs multiples du genre décrit ci-dessus, tout en permettant d'assurer pratiquement un traitement d'un même débit gazeux.

Ce résultat est obtenu en mettant en oeuvre la combinaison des trois mesures suivantes:

h) le gaz résultant de la décompression à pression intermédiaire à co-courant est dirigé vers un réservoir de stockage tandis que le gaz d'élution est préleré sur ledit reservoir de stockage;

i) le nombre d'adsorbeurs subissant lesdites phases opératoires successives est au moins égal à six et préférentiellement compris entre six et neuf, tandis que le nombre d'adsorbeurs simultanément en phase de production isobare est supérieur ou égal à deux et préférentiellement égal à deux ou trois, chaque adsorbeur ayant un cycle opératoire retardé de

$$\frac{1}{n}$$

ème de période de cycle (T) par rapport à un précédent (n étant le nombre d'adsorbeurs) et chaque phase de production ayant une dureé de $(x/n)$ T (x étant le nombre d'adsorbeurs en roduction simultaneé)

j) la durée d'une phase d'élution selon e) est plus longue que la durée d'une phase de décompression intermédiaire dans un rapport au moins égal à 1,5 et préférentiellement égal à 2 et 3.

Ce résultat est assuré, dans un système à adsorbeurs multiples, comprenant au moins six adsorbeurs, en réduisant la durée de la décompression à pression intermédiaire selon c) tout en maintenant la phase d'élution selon e) à sa nécessaire durée minimale pour assurer une régénération finale correcte de l'adsorbeur. C'est cette réduction de la durée de la phase de décompression à pression intermédiaire par rapport à la durée de la phase d'élution qui permet d'obtenir une réduction d'une unité du nombre d'adsorbeurs dans un système du genre décrit dans l'USP 3.986.849 qui propose toujours d'ajuster strictement cette phase de décompression à pression intermédiaire à la durée exacte de la phase d'élution, puisque cette décompression intermédiaire fournit un gaz immédiatement utilisé pour éluer un adsorbeur.

Cette technique de stockage intermédiaire et temporaire d'un gaz résultant d'une décompression à pression intermédiaire pour servir à une élution est connue en soi (cf. brevet français 73.27.079/2.193.643, brevet français 75.38.816/2.294.741) mais elle a pour objet de résoudre un problème tout à fait different, à savoir surseoir dans le temps dans un système à deux adsorbeurs, à l'opération d'élution d'un second et unique adsorbeur en cours de régénération. Tel n'est pas le cas de la présente invention où, à tout moment, il existe au moins un adsorbeur en cours d'élution simultanément à un adsorbeur en cours de décompression à pression intermédiaire, le but du réservoir de gaz d'élution n'étant que d'étaler dans le temps la fourniture du gaz d'élution, alors que sa production a lieu dans un laps de temps plus bref, pour des raisons d'utilisation maximale des adsorbeurs. Les caractéristiques et avantages de l'invention ressortiront de la description qui suit en référence aux dessins annexés dans lesquels:

- la figure 1 est un diagramme représentant en ordonnée les pressions en fonction du temps noté en abscisse pour un adsorbeur sur lequel sont indiquées également, mais en dessous, les variations de pression du réservoir de stockage;

- les figures 2 à 5 sont des diagrammes montrant quatre variantes de réalisation de mise en oeuvre de l'invention;

- la figure 6 est une vue schématique, à titre d'exemple, d'une réalisation opérant selon le diagramme de la figure 4.

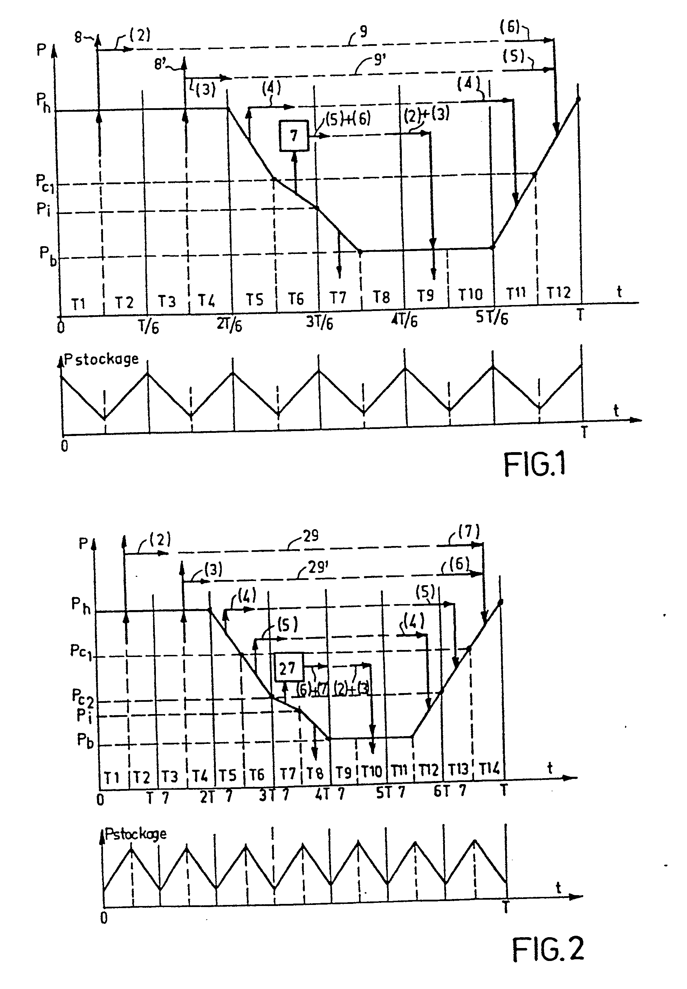

En se référant au diagramme de la figure 1, on a représenté, pour un groupe de six adsorbeurs numérotés 1, 2, 3, 4, 5 et 6 coopérant avec un réservoir de stockage indiqué en 7, la variation de pression P pour l'adsorbeur 1 pendant toute là période d'un cycle opératoire qui s'établit entre le temps 0 et le temps T et l'on a subdivisé cette période T en douze sous-périodes intitulées $T_1$, $T_2$, $T_3$, $T_4$, $T_5$, $T_6$, $T_7$, $T_8$, $T_9$, $T_{10}$, $T_{11}$ et $T_{12}$; l'on précise immédiatement que tous les adsorbeurs présentant les mêmes phases opératoires que celui indiqué au diagramme pour l'adsorbeur 1 avec un décalage dans le temps de

$$\frac{T}{6}$$

d'un adsorbeur au suivant.

On précise également que les traits orientés par flèches indiquent les mouvements et destinations des courants gazeux; lorsque les flèches sont parallèles à l'ordonnée elles indiquent, en outre, le sens de circulation dans un adsorbeur: lorsqu'une flèche est dans le sens des ordonnées croissantes (vers le haut d'un diagramme) le courant est dit à co-courant, dans un adsorbeur; si la flèche dirigée vers le haut est située en dessous du trait indiquant la pression dans l'adsorbeur, le courant pénètre dans l'adsorbeur par l'extrémité d'entrée de l'adsorbeur; si la flèche, dirigée vers le haut, est située au-dessus du trait indiquant la pression, le courant sort de l'adsorbeur par l'extrémité de sortie de l'adsorbeur, les extrémités d'entrée et de sortie étant respectivement celles du gaz à traiter et du gaz soutiré en phase de production isobare; lorsqu'une flèche est dans le sens des ordonnées décroissantes (vers le bas du diagramme), le courant est dit à contre-courant, dans un adsorbeur. Si la flèche dirigée vers le bas est située en dessous du trait indiquant la pression de l'adsorbeur, le courant sort de l'adsorbeur par l'extrémité d'entrée de l'adsorbeur; si la flèche dirigée vers le bas est située au-dessus du trait indiquant la pression, le courant pénètre dans l'adsorbeur par l'extrémité de sortie de l'adsorbeur, les extrémités d'entrée et de sortie étant toujours celles du gaz à traiter et du gaz soutiré en phase de production isobare. D'autre part, on a indiqué en traits épais et pleins les courants gazeux qui concernent exclusivement l'adsorbeur 1 et en traits épais, mais pointillés, les courants gazeux en provenance ou en direction d'autres adsorbeurs, ou du réservoir-tampon.

Ainsi, pour l'adsorbeur 1, la phase de production 8 et 8' à pression haute $P_h$ dure de 0 à

$$\frac{2T}{6}$$

(sous-période $T_1 + T_2 + T_3 + T_4$); dans une partie terminale de la phase de production 8, et plus précisément pendant la sous-période $T_2$, un courant gazeux de dérivation 9 est prélevé pour être envoyé à contre-courant dans l'adsorbeur 2 pour assurer la recompression finale de ce dernier; dans une partie terminale de la phase de production 8', et plus précisement pendant la sous-période $T_4$, un courant gazeux de dérivation 9' est prélevé pour être envoyé à contre-courant dans l'adsorbeur 3. La première décompression de l'adsorbeur 1 s'effectue durant la sous-période $T_5$ par équilibrage avec l'adsorbeur 4 (décompression à co-courant de l'adsorbeur 1 et recompression à contre-courant de l'adsorbeur 4). La seconde décompression à co-courant intervient durant la sous-période $T_6$, et le gaz est évacué vers le réservoir de stockage 7 pour éluer l'adsorbeur 5, puis l'adsorbeur 6. La troisième décompression à contre-courant a lieu durant la sous-période T avec échappement à l'atmosphère. La phase d'élusion de l'adsorbeur 1 s'effectue avec du gaz provenant du réservoir de stockage 7 alimenté par l'adsorbeur 2, puis l'adsorbeur 3, au cours de leurs phases de deuxième décompression et a lieu durant les sous-périodes $T_8$, $T_9$, $T_{10}$, le gaz d'élution s'écoulant à contre-courant dans l'adsorbeur 1. La première recompression à contre-courant par équilibrage avec l'adsorbeur 4 en cours de phase de première décompression s'effectue durant la sous-période $T_{11}$ et l'on retrouve alors la pression $P_{C1}$ correspondant à la première décompression de la sous-période $T_5$. La recompression finale de l'adsorbeur 1 s'effectue durant la sous-période $T_{12}$ grâce à une dérivation du courant de gaz de production effectuée sur les adsorbeurs 5 + 6. Bien entendu, les autres adsorbeurs 2, 3, 4, 5 et 6 présentent rigoureusement les mêmes modalités opératoires que celles qui viennent d'être décrites en référence à l'adsorbeur 1 mais avec un décalage de

$$\frac{T}{6}$$

et l'on a noté, ci-dessous, pendant les sous-périodes de $T_1$ à $T_{12}$, les modalités opératoires des différents adsorbeurs 1 à 6 en fonction des phases de "production", de "première décompression", de "seconde décompression vers le réservoir 7" (vers "stock"), de "troisième décompression" ou "décompression finale", d'"élution", puis de "première recompression" et de "recompression finale". En se référant au tableau de la page précédente, on voit par exemple qu'il y a en permanence deux adsorbeurs en phase de production, ce qui est l'objectif souhaité. Pour ce qui concerne les autres phases décalées l'une de l'autre d'un temps

$$\frac{T}{6}$$

, on voit qu'elles se reproduisent de façon similaire avec chaque phase de première décompression par équilibrage au cours des sous-périodes $T_1$, $T_3$, $T_5$, $T_7$, $T_9$, $T_{11}$ puis une seconde décompression vers le stockage au cours des sous-périodes $T_2$, $T_4$, $T_6$, $T_8$, $T_{10}$, $T_{12}$. Enfin, une décompression finale pendant les sous-périodes $T_1$, $T_3$, $T_5$, $T_7$, $T_9$, $T_{11}$. L'élution par prélèvement d'un stockage a lieu en permanence; mais dans une première sous-période $T_1$, $T_3$, $T_5$, $T_7$, $T_9$, $T_{11}$, ce prélèvement intéresse un seul adsorbeur tandis que pendant la seconde sous-periode suivante $T_2$, $T_4$, $T_6$, $T_8$, $T_{10}$, $T_{12}$ ce prélèvement intéresse, au contraire, deux adsorbeurs, en sorte que comme on le remarque à la figure 1, la pression du reservoir de stockage chute pendant ces premières sous-périodes $T_1$, $T_3$, $T_5$, $T_7$, $T_9$, $T_{11}$ alors qu'elle s'élève pendant les secondes sous-périodes $T_2$, $T_4$, $T_6$, $T_8$, $T_{10}$, $T_{12}$ grâce au courant dirigé vers le stockage durant ces mêmes secondes sous-périodes. La première recompression intervient pendant les sous-périodes $T_1$, $T_3$, $T_5$, $T_7$, $T_9$, $T_{11}$ tandis que la recompression intervient pendant les sous-périodes $T_2$, $T_4$, $T_6$, $T_8$, $T_{10}$, $T_{12}$. On remarque, bien entendu, que le courant gazeux issu de la première décompression des adsorbeurs 5, 6, 1, 2, 3, 4 est utilisé pour realiser la première recompression, respectivement des adsorbeurs 2, 3, 4, 5, 6, 1, jusqu'à ce que soit atteint l'équilibre des pressions entre chacun des couples d'adsorbeurs considérés.

On se réfère maintenant à la figure 2 où l'on a représenté la variation de la pression d'un adsorbeur d'un groupe de sept adsorbeurs avec un stockage 27. La phase de production dure du temps 0 à

$$\frac{2T}{6}$$

(sous-période $T_1$, $T_2$, $T_3$, $T_4$); la phase de première décompression s'effectue durant la sous-période $T_5$ tandis que la phase de deuxième décompression par second équllibrage s'effectue durant la sous-période $T_6$. La phase de décompression vers le stockage 27 s'effectue durant la sous-période $T_7$ tandis que la phase de décompression finale s'effectue durant la sous-période T; la phase

**TABELLE**

| | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ |
|---|---|---|---|---|---|---|---|---|---|---|---|---|
| Production | 6 + 1 | 6 + 1 | 1 + 2 | 1 + 2 | 2 + 3 | 2 + 3 | 3 + 4 | 3 + 4 | 4 + 5 | 4 + 5 | 5 + 6 | 5 + 6 |
| 1ère décompression (équilibrage) | 5 | | 6 | | 1 | | 2 | | 3 | | 4 | |
| Vers stockage | | 5 | | 6 | | 1 | | 2 | | 3 | | 4 |
| Décompression finale | 4 | | 5 | | 6 | | 1 | | 2 | | 3 | |
| Elution | 3 | 3 + 4 | 4 | 4 + 5 | 5 | 5 + 6 | 6 | 6 + 1 | 1 | 1 + 2 | 2 | 2 + 3 |
| 1ère recompression (équilibrage) | 2 | | 3 | | 4 | | 5 | | 6 | | 1 | |
| Recompression finale | | 2 | | 3 | | 4 | | 5 | | 6 | | 1 |

d'élution s'effectue durant les sous-périodes $T_9, T_{10}, T_{11}$. La phase de première recompression s'effectue durant la sous-période $T_{12}$. La phase de seconde recompression par équilibrage s'effectue durant la sous-période $T_{13}$ et la phase de recompression finale par dérivation de courant gazeux 29, à partir du courant de production, s'effectue durant la sous-période $T_{14}$. On a établi, ci-après, comme précédemment, un tableau montrant en fonction des différentes sous-périodes $T_1$ à $T_{14}$ les différents adsorbeurs concernés par les différentes phases de production. La lecture de ce tableau montre également les différentes phases opératoires.

**Tabelle**

| | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ |
|---|---|---|---|---|---|---|---|---|---|---|---|---|---|---|
| Production | 7 + 1 | 7 + 1 | 1 + 2 | 1 + 2 | 2 + 3 | 2 + 3 | 3 + 4 | 3 + 4 | 4 + 5 | 4 + 5 | 5 + 6 | 5 + 6 | 6 + 7 | 6 + 7 |
| 1ère décompression (équilibrage) | 6 | | 7 | | 1 | | 2 | | 3 | | 4 | | 5 | |
| 2ème décompression (équilibrage) | | 6 | | 7 | | 1 | | 2 | | 3 | | 4 | | 5 |
| Vers stockage | 5 | | 6 | | 7 | | 1 | | 2 | | 3 | | 4 | |
| Décompression finale | | 5 | | 6 | | 7 | | 1 | | 2 | | 3 | | 4 |
| Elution | 3 + 4 | 4 | 4 + 5 | 5 | 5 + 6 | 6 | 6 + 7 | 7 | 7 + 1 | 1 | 1 + 2 | 2 | 2 + 3 | 3 |
| 1ère recompression (équilibrage) | | 3 | | 4 | | 5 | | 6 | | 7 | | 1 | | 2 |
| 2ème recompression (équilibrage) | 2 | | 3 | | 4 | | 5 | | 6 | | 7 | | 1 | |
| Recompression finale | | 2 | | 3 | | 4 | | 5 | | 6 | | 7 | | 1 |

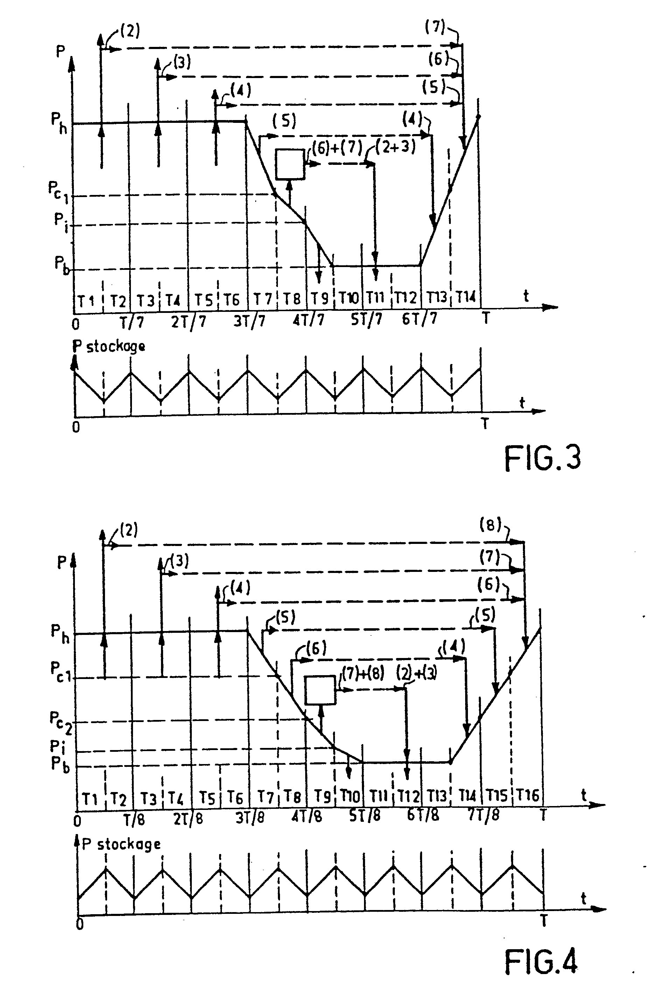

La figure 3 décrit un diagramme concernant sept adsorbeurs avec un stockage, mais ici, il y a trois adsorbeurs en production simultanée et un seul équilibrage. On a également détaillé, ci-après, en fonction des sous-périodes $T_1$ à $T_{14}$, les différentes phases opératoires avec les numéros d'adsorbeurs concernés.

| | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ |
|---|---|---|---|---|---|---|---|---|---|---|---|---|---|---|
| Production | 6 7 1 | 6 7 1 | 7 1 2 | 7 1 2 | 1 2 3 | 1 2 3 | 2 3 4 | 2 3 4 | 3 4 5 | 3 4 5 | 4 5 6 | 4 5 6 | 5 6 7 | 5 6 7 |
| 1ère décompression (équilibrage) | 5 | | 6 | | 7 | | 1 | | 2 | | 3 | | 4 | |
| Vers stockage | | 5 | | 6 | | 7 | | 1 | | 2 | | 3 | | 4 |
| Décompression finale | 4 | | 5 | | 6 | | 7 | | 1 | | 2 | | 3 | |
| Elution | 3 | 3 + 4 | 4 | 4 + 5 | 5 | 5 + 6 | 6 | 6 + 7 | 7 | 7 + 1 | 1 | 1 + 2 | 2 | 2 + 3 |
| 1ère recompression (équilibrage) | 2 | | 3 | | 4 | | 5 | | 6 | | 7 | | 1 | |
| Recompression finale | | 2 | | 3 | | 4 | | 5 | | 6 | | 7 | | 1 |

La figure 4 décrit un diagramme concernant huit adsorbeurs toujours avec un stockage et trois adsorbeurs en production et deux équilibrages. On a également noté, dans le tableau ci-dessous, les numéros d'adsorbeurs concernés par les différentes phases opératoires en fonction des sous-périodes $T_1$ à $T_{16}$.

**Tabelle**

| | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ | $T_{15}$ | $T_{16}$ |
|---|---|---|---|---|---|---|---|---|---|---|---|---|---|---|---|---|
| Production | 7 8 1 | 7 8 1 | 8 1 2 | 8 1 2 | 1 2 3 | 1 2 3 | 2 3 4 | 2 3 4 | 3 4 5 | 3 4 5 | 4 5 6 | 4 5 6 | 5 6 7 | 5 6 7 | 6 7 8 | 6 7 8 |
| 1ère décompression (équilibrage) | 6 | | 7 | | 8 | | 1 | | 2 | | 3 | | 4 | | 5 | |
| 2ème décompression (équilibrage) | | 6 | | 7 | | 8 | | 1 | | 2 | | 3 | | 4 | | 5 |
| Vers stockage | 5 | | 6 | | 7 | | 8 | | 1 | | 2 | | 3 | | 4 | |
| Décompression finale | | 5 | | 6 | | 7 | | 8 | | 1 | | 2 | | 3 | | 4 |
| Elution | 3 + 4 | 4 | 4 + 5 | 5 | 5 + 6 | 6 | 6 + 7 | 7. | 7 + 8 | 8 | 8 + 1 | 1 | 1 + 2 | 2 | 2 + 3 | 3 |
| 1ère recompression (équilibrage) | | 3 | | 4 | | 5 | | 6 | | 7 | | 8 | | 1 | | 2 |
| 2ème recompression (équilibrage) | 2 | | 3 | | 4 | | 5 | | 6 | | 7 | | 8 | | 1 | |
| Recompression finale | | 2 | | 3 | | 4 | | 5 | | 6 | | 7 | | 8 | | 1 |

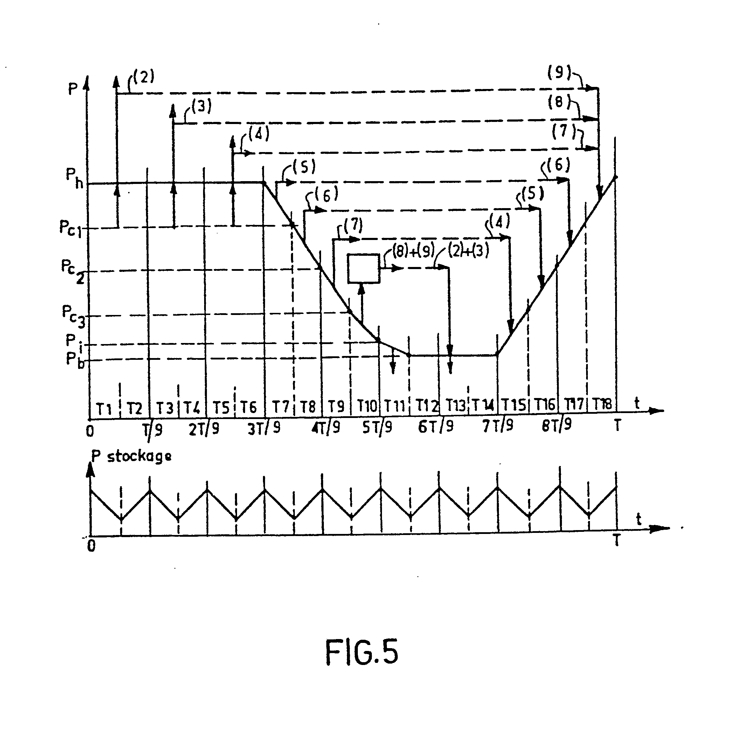

La figure 5 concerne, ici, un groupe de neuf adsorbeurs avec un seul stockage et trois adsorbeurs en production simultanée et trois équilibrages successifs. On a représenté, ci-dessous, le même tableau que précédemment montrant les différentes phases opératoires concernées par les différents adsorbeurs.

**Tabelle**

| | $T_1$ | $T_2$ | $T_3$ | $T_4$ | $T_5$ | $T_6$ | $T_7$ | $T_8$ | $T_9$ | $T_{10}$ | $T_{11}$ | $T_{12}$ | $T_{13}$ | $T_{14}$ | $T_{15}$ | $T_{16}$ | $T_{17}$ | $T_{18}$ |
|---|---|---|---|---|---|---|---|---|---|---|---|---|---|---|---|---|---|---|
| Production | 891 | 891 | 912 | 912 | 123 | 123 | 234 | 234 | 345 | 345 | 456 | 456 | 567 | 567 | 678 | 678 | 789 | 789 |
| 1ère décompression (équilibrage) | 7 | | 8 | | 9 | | 1 | | 2 | | 3 | | 4 | | 5 | | 6 | |
| 2ème décompression (équilibrage) | | 7 | | 8 | | 9 | | 1 | | 2 | | 3 | | 4 | | 5 | | 6 |
| 3ème décompression (équilibrage) | 6 | | 7 | | 8 | | 9 | | 1 | | 2 | | 3 | | 4 | | 5 | |
| Vers stockage | | 6 | | 7 | | 8 | | 9 | | 1 | | 2 | | 3 | | 4 | | 5 |
| Décompression finale | 5 | | 6 | | 7 | | 8 | | 9 | | 1 | | 2 | | 3 | | 4 | |
| Elution | 4 | 4+5 | 5 | 5+6 | 6 | 6+7 | 7 | 7+8 | 8 | 8+9 | 9 | 9+1 | 1 | 1+2 | 2 | 2+3 | 3 | 3+4 |
| 1ère recompression (équilibrage) | 3 | | 4 | | 5 | | 6 | | 7 | | 8 | | 9 | | 1 | | 2 | |
| 2ème recompression (équilibrage) | | 3 | | 4 | | 5 | | 6 | | 7 | | 8 | | 9 | | 1 | | 2 |
| 3ème recompression (équilibrage) | 2 | | 3 | | 4 | | 5 | | 6 | | 7 | | 8 | | 9 | | 1 | |
| Recompression finale | | 2 | | 3 | | 4 | | 5 | | 6 | | 7 | | 8 | | 9 | | 1 |

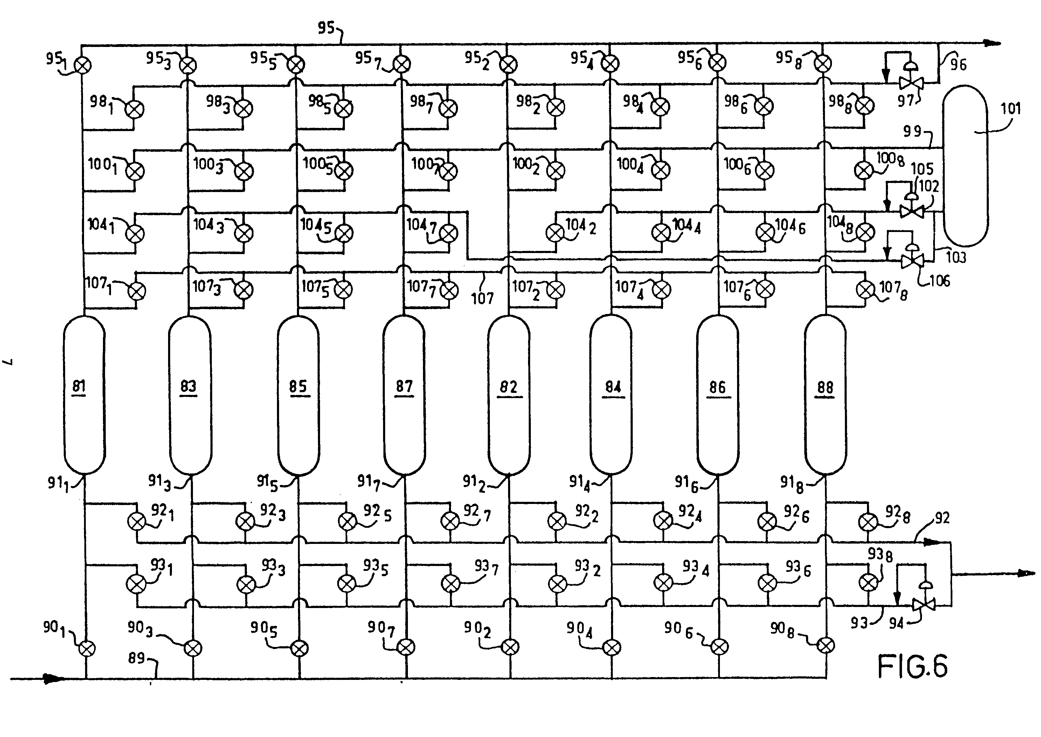

Selon la figure 6, qui représente une forme de mise en oeuvre d'un procédé fonctionnant selon la figure 4, on dispose de huit adsorbeurs 81 à 88, chaque adsorbeurs 81 à 88 étant associè:

- à une ligne d'admission 89 à vannes $90_1$, $90_2$... $90_8$; le gaz à traiter étant admis aux entrées $91_1$ à $91_8$ de chaque adsorbeur durant sa phase de production isobars de $T_1$ à $T_6$;

- une ligne de décharge 92 avec des vannes de décharge $92_1$ à $92_8$ pour la phase d'élution de $T_{11}$ à $T_{13}$;

- une ligne de décharge 93 à régulateur de débit 94 avec vannes de décharge $93_1$ à $93_8$ pour la phase de décompression finale $T_{10}$ - une ligne de soutirage 95 à vannes $95_1$ à $95_8$ pour la phase de production de $T_1$ à $T_6$ avec une ligne dérivée 96 à régulateur 97 et vannes $98_1$ à $98_8$ pour la phase de repressurisation finale $T_{16}$ - une ligne d'alimentation 99 du réservoir de stockage 101 avec des vannes $100_1$ à $100_8$ pour la phase de décompression à pression intermédiaire $T_9$;

- deux lignes dérivées de soutirage du stockage 102 et 103, à régulateur 105 et 106, l'une (103) à vannes $104_1$, $104_3$, $104_5$, $104_7$, l'autre (102) à vannes $104_2$, $104_4$, $104_6$ et $104_8$ pour la phase d'élution $T_{11}$ à $T_{13}$.

- une ligne d'équilibrage 107 à vannes $107_1$ à $107_8$ pour les phases de première décompression $T_7$, de deuxième décompression $T_8$, de première recompression $T_{14}$ et de deuxième recompression $T_{15}$.

**Revendications**

1. - Procédé d'adsorption mettant en oeuvre une pluralité d'adsorbeurs avec les phases opératoires suivantes:

a) production isobare à pression dite haute à co-courant simultanément sur plusieurs adsorbeurs;

b) au moins une décompression à co-courant par équilibrage avec un autre adsorbeur en cours de recompression à contre-courant;

c) une décompression à pression intermédiaire à co-courant;

d) une décompression finale à pression dite basse à contre-courant;

e) une élution à ladite pression basse à contre-courant;

f) une recompression à contre-courant par au moins un équilibrage avec un adsorbeur en cours de décompression;

g) une recompression finale à contre-courant par derivation d'une partie du courant de production; caractérisé en ce que:

h) le gaz resultant de la décompression à pression intermédiaire à co-courant est dirigé vers un reservoir tandis que le gaz d'élution est prélevé sur ledit reservoir de stockage;

i) le nombre d'adsorbeurs subissant lesdites phases opératoires successives est au moins égal à six et préferentiellement compris entre six et neuf, tandis que le nombre d'adsorbeurs simultanément en phase de production isobare est supérieur ou égal à deux et préférentiellement egal à deux ou trois chaque adsorbeur ayant un cycle opératoir retardé de

ème de période de cycle (T) par rapport à un précedent (n étant le nombre d'adsorbeurs) et chaque phase de production ayant une dureé de

$$\left(\frac{x}{n}\right)$$

T (x étant le nombre d'adsorbeurs en production simultanée)

j) la durée d'une phase d'élution selon e) est plus longue que la durée d'une phase de décompression intermédiaire dans un rapport au moins égal à 1,5 et preférentiellement égal à 2 et 3.

2. - Procédé d'adsortpion selon la revendication 1, caractérisé en ce que, lorsque le nombre d'adsorbeurs est six ou sept, la phase b) comprend une décompression unique par équilibrage.

3. - Procédé d'adsorption selon la revendication 1, caractérisé en ce que lorsque le nombre d'adsorbeurs est sept ou huit, la phase b) comprend deux décompressions successives par équilibrage d'abord avec un adsorbeur ayant déjà subi un premier équilibrage, puis avec un autre adsorbeur en fin de phase d'élution.

4. - Procédé d'adsorption selon la revendication 1, caractérisé en ce que lorsque le nombre d'adsorbeurs est huit ou neuf, la phase b) comprend trois décompressions successives par équilibrage avec trois autres adsorbeurs.

**Patentansprüche**

1. Adsorptionsverfahren unter Verwendung einer Vielzahl von Adsorbern mit folgenden Funktionsphasen:

a) isobare Produktion bei sogenanntem hohem Druck im Gleichlauf gleichzeitig über mehreren Adsorbern;

b) mindestens eine Druckverminderung im Gleichlauf durch Ausgleich mit einem anderen Adsorber im Verlauf der Wiederkompression im Gegenlauf;

c) eine Druckverminderung auf Zwischendruck im Gleichlauf;

d) eine abschließende Druckverminderung auf sogenannten Niederdruck im Gegenlauf;

e) eine Auswaschung auf den Niederdruck im Gegenlauf; f) eine Wiederkompression im Gegenlauf durch mindestens einen Ausgleich mit einem anderen Adsorber im Verlauf der Druckverminderung;

g) eine abschließende Wiederkompression im Gegenlauf durch Ableitung eines Teils des Produktionsstromes; dadurch gekennzeichnet, daß gilt:

h) das sich aus der Druckverminderung auf Zwischendruck im Gleichlauf ergebende Gas wird zu einem Lagerbehälter geführt, während das Auswaschgas über dem Lagerbehälter entnommen wird;

i) die Anzahl der Adsorber, welche diese aufeinanderfolgenden Funktionsphasen durchgehen, ist mindestens gleich sechs und vorzugsweise zwischen sechs und neun, während die Anzahl der Adsorber gleichzeitig in isobarer Produktionsphase über oder gleich zwei und vorzugsweise gleich zwei oder drei ist, wobei jeder Adsorber einen verzogerten Funktionszyklus um

$$\frac{1}{n}$$

der Zyklusperiode (T), bezogen auf einen vorhergehenden Zyklus hat (wobei n die Anzahl der Adsorber ist) und jede Produktionsphase eine Dauer von

$$\frac{x}{n}$$

T hat (wobei x die Anzahl der Adsorber bei gleichzeitiger Produktion ist);

j) die Dauer einer Auswaschphase nach e) ist länger als die Dauer einer Zwischendruckverminderungsphase in einem Verhältnis mindestens gleich 1,5 und vorzugsweise gleich 2 und 3.

2. Adsorptionsverfahren nach Anspruch 1, dadurch gekennzeichnet, daß während die Anzahl der Adsorber sechs oder sieben ist, die Phase b) eine Druckverminderung einzig durch Ausgleich aufweist.

3. Adsorptionsverfahren nach Anspruch 1, dadurch gekennzeichnet, daß während die Anzahl der Adsorber sieben oder acht ist, die Phase b) zwei aufeinanderfolgende Druckverminderungen durch Ausgleich aufweist, erst mit einem Adsorber, der schon einem ersten Ausgleich unterworfen wurde, dann mit einem anderen Adsorber am Ende der Auswaschphase.

4. Adsorptionsverfahren nach Anspruch 1, dadurch gekennzeichnet, daß während die Anzahl der Adsorber acht oder neun ist, die Phase b) drei aufeinanderfolgende Druckverminderungen durch Ausgleich mit drei anderen Adsorbern aufweist.

**Claims**

1. Process by adsorption using a plurality of adsorbents with the following operating phases:

a) isobaric production by a pressure called high, with cocurrent simultaneously over several adsorbents;

b) at least one decompression with co-current by equalization with another adsorbent in the course of recompression by counter-current;

c) a decompression by intermediate pressure by co-current;

d) a final decompression by pressure called low, by counter-current;

e) an elution by the said low pressure by counter-current;

f) a recompression by counter-current by at least one equalization with an adsorbent in the course of decompression;

g) a final recompression by counter-current by derivation of one part of the production current; characterized in that,

h) the resulting gas of the decompression by intermediate pressure by co-current is directed to a stockage reservoir, while the elution gas is drained over the said stage reservoir;

i) the number of adsorbents subjected to the said successive operating phases is at least equal to six and preferably comprised between six and nine, while the number of adsorbents simultaneously in isobaric production phase is superior or equal to two and preferably equal to two or three, each adsorbent having an operating delayed cycle of

$$\frac{x}{n}$$

of the period of the cycle (T) with reference to a preceeding (n being the number of adsorbents) and each production phase having a duration of

$$\left(\frac{x}{n}\right)$$

T (x being the number of adsorbents in simultaneous production),

j) the duration of one elution phase according to e) is longer than the duration of an intermediate decompression phase in a relation of at least equal to 1,5 and preferably equal to 2 and 3.

2. Process of adsorption according to claim 1, characterized in that, while the number of adsorbents is six or seven, the phase b) comprises a decompression unique by equalization.

3. Process of adsorption according to claim 1, characterized in that, while the number of adsorbents is seven or eight, the phase b) comprises two successive decompressions by equalization, first with an adsorbent having already subjected to a first equalization, then with another adsorbent at the end of the elution phase.

4. Process of adsorption according to claim 1, characterized in that, while the number of adsorbents is eight or nine, the phase b) comprises three successive decompressions by equalization with three other adsorbents.

FIG.1

FIG.2

FIG.3

FIG.4

3

FIG.5

FIG.6

0 108 005